# EUROPÄISCHE PATENTSCHRIFT

(11) **EP 0 655 474 B1**
(45) Veröffentlichungstag und Bekanntmachung des Hinweises auf die Patenterteilung: **10.03.1999**
(21) Anmeldenummer: 94118119.0
(22) Anmeldetag: 17.11.1994
(51) Int. Cl.: C08G 18/30, C09J 175/04

(54) **Lösungsmittelfreie 2-Komponentenpolyurethan-Reaktivklebstoffe und ihre Verwendung für die Herstellung von sandwichartigen Fahrzeug-Innenverkleidungen**
Solvent-free two-component polyurethane adhesives and their use in the manufacture of sandwich-type motor vehicle interior panels
Adhésifs sans solvant à deux composants et leur utilisation pour la fabrication de panneaux intérieurs pour automobiles

(30) Priorität: 29.11.1993 DE 4340561
(43) Veröffentlichungstag der Anmeldung: 31.05.1995
(73) Patentinhaber: BAYER AG, 51368 Leverkusen (DE)
(72) Erfinder: König, Eberhard, Dr., D-51375 Leverkussen (DE); Gronemeier, Uwe-Fritz, Dipl.-Ing, D-51515 Kürten (DE); Wegener, Dirk, Dr., D-40789 Monheim (DE)

(56) Entgegenhaltungen:
- EP-A- 0 224 848
- EP-A- 0 452 754

## Beschreibung

Die Erfindung betrifft lösungsmittelfreie Zweikomponenten-Klebstoffe, deren aufgespritzter Klebstoff-Film mehrere Stunden verarbeitbar ist. Die Klebstoffe werden vorzugsweise bei sandwichartig aufgebauten Automobilinnenverkleidungen, z.B. Autohimmeln, eingesetzt. Hierbei dienen sie einerseits zum Verkleben der flächigen Materialien, wie z.B. Schaumstoff, Glasvlies und Dekorstoff, miteinander. Andererseits sollen die Klebstoffe die Steifigkeit des Sandwich-Aufbaues erhöhen.

Klebstoffe für den genannten Anwendungszweck werden bereits eingesetzt. Beispielsweise kann man mit im Handel befindlichen thermoplastischen Folien aus Polyethylen, Polypropylen oder Polyamid die Verklebung des oben genannten Sandwiches unter dem Einfluß von Wärme und Druck erreichen. Diese Verklebungen behalten allerdings ihre naturgegebene Thermoplastizität bei und widerstehen daher einer höheren thermischen Beanspruchung nicht ohne Ablösung, z.B. einer 48stündigen Wärmelagerung bei 110°C. Außerdem tragen derartige Klebstoffe als weiche Thermoplasten nicht zur Erhöhung der Sandwich-Steifigkeit bei.

Auch die in der DE-OS 3 543 120 beschriebenen Polyurethan-Schmelzklebstoffe können von ihrer Natur her den Sandwich nicht versteifen.

Ein anderes, in der Praxis eingesetztes Verfahren arbeitet mit NCO-Gruppen aufweisenden Prepolymerisaten, die einen Anteil von Lösungsmitteln enthalten.

Diese härten mit Luftfeuchtigkeit aus. Die Verarbeitungszeit derartig mit Klebstoff versehenen Sandwich-Aufbauten zu Formteilen ist, abgesehen vom Nachteil der Lösemittelhaltigkeit, aber nur auf 20 Minuten beschränkt. Eine flexible Produktion, wo man die Sandwiches auf Vorrat produziert und dann an anderer Stelle verpreßt, ist damit nicht möglich.

Schließlich kennt man zweikomponentige Reaktionsklebstoffe, beispielsweise aus einem niedrigmolekularen Polyisocyanat und einem niedrigmolekularen Polyol, wie sie u.a. im Polyurethan-Handbuch, Carl Hanser Verlag, München, Wien, 1993, S. 643 ff, beschrieben sind. Man kombiniert z.B. ein genügend verzweigtes, kurzkettiges Polyol mit einem geringen Überschuß an Polyisocyanat und erhält einen definiert abbindenden, harten Klebstoff. Ein solcher Prototyp ist z.B. im Beispiel 2 beschrieben. Die Haftung und Biegesteifigkeit eines solchen Klebstoffes entsprechen den Forderungen. Nachteilig hingegen ist die mit maximal 40 Minuten kurze Verarbeitungszeit.

Gewünscht wird in der Praxis ein Klebstoff, der sowohl nach dem sogenannten kaltformbaren wie auch nach dem sogenannten warmformbaren Preßverfahren in einer Arbeitsschicht von ca. 8 Stunden Dauer verarbeitbar ist. Beide Verfahrensvarianten werden in den Beispielen 1 und 3 erläutert. Die aus der US-PS 5 166 303 bekannten Polyurethan-Kompositionen erfüllen diese Anforderungen nicht.

Aufgabe der Erfindung war es daher, einen Klebstoff, der neben den Forderungen nach Wirtschaftlichkeit, guter Haftung und Erhöhung der Biegesteifigkeit insbesondere eine flexible Verarbeitbarkeit zwischen einer und 10 Stunden erfüllt, zu entwickeln.

Überraschend konnte diese Aufgabe mit den erfindungsgemäßen Klebstoffen gelöst werden.

Gegenstand der Erfindung sind lösungsmittelfreie 2-Komponenten-Polyurethan-Reaktionsklebstoffe, bestehend aus
1.) einer wasserhaltigen Polyolkomponente,
2.) einer Polyisocyanat-Komponente auf Basis von Diphenylmethan-diisocyanaten und gegebenenfalls
3.) Hilfs- und Zusatzstoffen,
dadurch gekennzeichnet, daß
a) die Polyolkomponente 1.) maximal drei OH-Gruppen, einen Wassergehalt von 0,25 bis 2,0 Gew.-% und eine OH-Zahl von 300-600, vorzugsweise 350-550, aufweist und
b) die Komponente 1) und die Komponente 2) in solchem Mengenverhältnis vorliegen, daß die Isocyanat-Kennzahl 120 bis 250 beträgt.

Erfindungsgemäß ist bevorzugt, daß
- der Wassergehalt der Komponente 1.) 0,5 bis 1,1 Gew.-% und daß
- die Kennzahl 140 bis 170 beträgt.

Die Erfindung betrifft ferner die Verwendung der lösungsmittelfreien 2-Komponenten-Polyurethan-Reaktionsklebstoffe zur Herstellung von sandwichartigen Fahrzeug-Innenverkleidungen, insbesondere Automobil-Innenverkleidungen.

Erfindungswesentlich sind der beträchtliche Wassergehalt und die hohe NCO-Kennzahl. Beide Kennzeichen sind für PUR-Reaktionsklebstoffe unüblich. Ohne diese Kennzeichen erfüllen indessen die Klebstoffe nicht ihre vorgesehene Aufgabe. Ihre Verarbeitungszeit beträgt dann, wie auch das Vergleichsbeispiel 2 zeigt, nur ca. 40 Minuten anstatt bis zu 15 Stunden, wie bei einem produktionsnahen Versuch ermittelt wurde.

Die erfindungsgemäßen Klebstoffe bestehen somit zu 60 bis 70 Gew.-%, bezogen auf Mischung, aus A) einer MDI-Komponente und zu 30 bis 40 Gew.-%, bezogen auf Mischung, aus B) einer Polyol-Komponente.

Beide Komponenten A und B werden mittels der für Polyurethane entwickelten 2-Komponenten-Hochdruck-Technologie vermischt und in dünner Schicht (Flächengewicht ca. 50 bis 100 g /m²) auf die zu verklebenden Substrate gespritzt. Der Klebstoff-Auftrag erfolgt bei Raumtemperatur. Die flächigen, mit Klebstoff beschichteten Substrate, z.B. Abdeckvlies, Glasmatte oder auch geschnittene Rovings auf einer Unterlage, Schaumplatte, Dekormaterial, werden übereinander gelegt. Es entsteht der Sandwich. Dieser Sandwich kann nach folgenden Verfahren zu dem Formteil, z.B. Autohimmel, weiterverarbeitet werden:
- Nach dem sogenannten Kaltformprozeß wird der kalte Sandwich in ein beheiztes Werkzeug (80 bis 130°C) gelegt. Das Werkzeug wird geschlossen. Der Sandwich wird also kalt verpreßt, denn die Wärme der beiden Werkzeughälften kann erst jetzt im geschlossenen Werkzeug einwirken.
- Bei dem sogenannten Warmformprozeß wird der Sandwich in einer Heizstation auf 130 bis 200°C vorgewärmt und wandert dann in das kalte Werkzeug.

Beide Prozesse sind technisch ausgereift und arbeiten mit beträchtlichen Stückzahlen. Bis jetzt standen nur die eingangs erwähnten Klebstoffe mit den beschriebenen Nachteilen zur Verfügung.

Als MDI-Komponente (Komponente A) können beliebige (vorzugsweise bei Raumtemperatur flüssige, technische) Gemische von 4,4'-Diisocyanatodiphenylmethan mit seinen Isomeren sowie mit deren höheren, mehr als 2 Isocyanatgruppen aufweisenden Homologen eingesetzt werden. Diese (technischen) MDI-Gemische haben vorzugsweise bei 25°C eine Viskosität von 20 bis 500 mPas. Bevorzugt ist ein technisches MDI-Gemisch mit einem NCO-Gehalt von ca. 31,4 Gew.-% und einer Viskosität bei 25°C von 200 mPas.

Die Polyolkomponente (Komponente B) ist vorzugsweise ein Gemisch aus folgenden Komponenten:
B1) 60 bis 90 Gew.-%, (bezogen auf B) di- und trifunktioneller Polyether, einer OH-Zahl von 28-600, die durch Umsetzung von Ethylenoxid und/oder Propylenoxid mit Glykolen, z.B. Ethylen-, 1,2-Propylenglykol, und mit 3-wertigen Alkoholen, z.B. Trimethylolpropan, zugänglich sind,
B2) zu 0 bis 15 Gew.-% (bezogen auf B) Hydroxygruppen aufweisenden Polyester einer OH-Zahl von 200-300,
B3) 5 bis 20 Gew.-% (bezogen auf B) Glykole vom Molekulargewicht 62-200.
B4) 1 bis 2 Gew.-% (bezogen auf B) Wasser und
B5) 0,5 bis 3,0 Gew.-% (bezogen auf B) Aktivatoren, z.B. K-acetat, Zinnverbindungen und/oder tert.-Aminen, die über mindestens eine Hydroxylgruppe im Molekül verfügen.

Die Mengen der Komponenten B1) bis B5) ergeben dabei jeweils 100 %.

Die Komponente B1 besteht bevorzugt zu
30 bis 40 Gew.-% (bezogen auf B) aus difunktionellen Propylenoxid-Polyethern vom OH-Zahl-Bereich von 112 bis 300.
15 bis 30 Gew.-% (bezogen auf B) aus trifunktionellen Propylen/Ethylenoxid-Polyethern vom OH-Zahl-Bereich von 300 bis 600 und
15 bis 20 Gew.-% ( bezogen auf B) aus trifunktionellen Propylen/Ethylenoxid-Polyethern vom OH-Zahl-Bereich von 28 bis 56.

Die Komponente B2 besteht bevorzugt zu
0 bis 15 Gew.-% (bezogen auf B) aus difunktionellen, bei Raumtemperatur flüssigen Polyestern, wie man sie durch Kondensation von Glykolen, z.B. Diethylenglykol, 1,2-Propylenglykol oder Neopentylglykol, mit Dicarbonsäuren, vorzugsweise Adipinsäure und/oder Phthalsäureanhydrid, erhalten kann.

Die Komponente B3 besteht insbesondere zu
5 bis 20 Gew.-% (bezogen auf B) aus Glykolen wie Ethylen-, Diethylen-, 1,2-oder 1,3-Propylenglykol, Butandiol-1,4.

Die erfindungsgemäß gegebenenfalls mitzuverwendenden Hilfs- und Zusatzstoffe sind an sich üblicher und bekannter Art, z.B. Katalysatoren, Entformungshilfsmittel, Stabilisatoren.

### Beispiele

### Beispiel 1 (erfindungsgemäß)

### Rezeptur

| | |
|---|---|
| 38,8 Gew.-Teile | eines auf Propylenglykol gestarteten Propylenoxid-Polyethers, OH-Zahl 270 |
| 19,4 Gew.-Teile | eines auf Trimethylolpropan gestarteten Propylenoxid-Polyethers, OH-Zahl 550 |
| 19,4 Gew.-Teile | eines auf Trimethylolpropan gestarteten Propylenoxid/Ethylenoxid (87 Gew.-% / 13 Gew.-%)-Polyethers, OH-Zahl 35 |
| 12,2 Gew.-Teile | eines Phthalsäure-Diethylenglykol-Ethylenglykol-Polyesters, OH-Zahl 290 |
| 10,2 Gew.-Teile | Ethylenglykol, OH-Zahl 1806 |
| 100,0 Gew.-Teile | Polyolmischung, OH-Zahl 438, Viskosität bei 20°C ca. 500 mPas |

Die Polyolkomponente wird durch folgende Formulierung sprühfertig gemacht:

| | |
|---|---|
| 100,0 Gew.-Teile | Polyolmischung, OH-Zahl 438, Viskosität bei 20°C ca. 500 mPas |
| 1,0 Gew.-Teile | Wasser, |
| 1,0 Gew.-Teile | einer Mischung aus 25 Gew.-% K-acetat und 75 Gew.-% Diethylenglykol |
| 0,1 Gew.-Teile | Dibutylzinndilaurat |
| 102,1 Gew.-Teile | Polyolkomponente, OH-Zahl ca. 495 |

Die Klebstoff-Mischung besteht aus:

| | |
|---|---|
| 100,0 Gew.-Teilen | obiger Polyolkomponente, OH-Zahl ca. 495 |
| 175,0 Gew.-Teilen | eines gebräuchlichen technischen Roh-MDI-Typs, NCO-Gehalt ca. 31,4 %, Viskosität bei 25°C ca. 200 mPas |
| 275,0 Gew.-Teile | Klebstoff-Mischung, Kennzahl (unter Einbeziehung von Wasser) ca. 148 |

Die oben angegebenen Aktivatormengen entsprechen einer Verarbeitungszeit von ca. 2 Stunden. Soll ein größerer Vorrat an mit Klebstoff beschichteten Vorprodukten angelegt und dieser erst nach einer Schicht von ca. 8 Stunden verpreßt werden, so muß man die Aktivatormengen halbieren usw.

### Verarbeitung (Variante 1)

Die obige Polyol- und MDI-Komponente wird von einer handelsüblichen Hochdruck-Kolben-Anlage (Arbeitsdruck ca. 200 bar) mit einer Austragsleistung für beide Komponenten von ca. 400 bis 800 g Gemisch pro Minute gemischt und versprüht. Das Mischungsverhältnis von NCO- zu OH-Gruppen beträgt dabei, wie oben angegeben, 1,48, entsprechend einer Kennzahl von 148.

Der teilautomatisierte Prozeß sei im Prinzip, wie folgt, beschrieben. Der Mischkopf befindet sich in einer Kabine. In die Kabine läuft ein Polyestervlies, auf das Glasfaserabschnitte gestreut wurden, ein. Die Glasfasern und z.T. auch das Polyestervlies werden mit ca. 50 bis 100 g Klebstoff pro m² besprüht. Im Anschluß an die Sprühkabine werden Schaumstoff-Platten auf die mit Klebstoff benetzten Glasfasern gelegt. In der nächsten Station läuft von oben das Dekorvlies ein und deckt die Schaumstoffplatte ab. Auch das Dekorvlies ist rückseitig mit Glasfasern und dem Klebstoff versehen worden.

In der nächsten Station werden die unten und oben mit je 2 Materialien inklusive des Klebstoffes bedeckten Schaumstoff-Platten herausgeschnitten. Dieser locker zusammengedrückte Sandwich wird für den endgültigen Arbeitsschritt gesammelt und gestapelt.

An dieser Stelle des Verarbeitungsprozesses entfaltet der erfindungsgemäße Klebstoff seine nützliche Fähigkeit, mehrere Stunden verarbeitbar zu sein. Der Verarbeiter kann dadurch die Produktion flexibel gestalten.

Ein Stapel mit Sandwich-Gelegen wird vor das beheizte Werkzeug (80 bis 130°C) gerollt. Das erste Sandwich ist z.B. eine Stunde alt. Die Sandwich-Gelege werden jetzt im ca. 1 Minuten-Takt verpreßt und dem heißen Werkzeug entnommen. Hierbei muß der Klebstoff abbinden und dem Sandwich Steifigkeit verleihen, so daß das noch warme, frisch gepreßte Teil, z.B. ein Autohimmel, beschädigungsfrei aus dem Werkzeug entnommen werden kann. Auch dies ist ein kritischer Punkt in dem beschriebenen Arbeitsablauf. Wenn hier der Klebstoff noch nicht abgebunden hat oder von Natur aus zu weich ist, dann läßt sich das Formteil nicht ohne Verzug oder Beschädigung entnehmen.

### Beispiel 2 (Vergleich)

Diese Klebstoff-Mischung enthält kein zugesetztes Wasser. Die Polyolmischung ist im Unterschied zu den erfindungsgemäßen Polyolmischungen aus einer beträchtlichen Menge eines tetrafunktionellen Polyethers zusammengesetzt. Die verwendete Kennzahl von 120 entspricht einem NCO-Überschuß, wie er für PUR-Klebstoffe mit definierter Aushärtung üblich ist.

### Rezeptur

| | |
|---|---|
| 49,0 Gew.-Teile | eines auf Trimethylolpropan gestarteten Propylenoxid/Ethylenoxid (87 Gew.-% / 13 Gew.-%)-Polyethers, OH-Zahl 35, (vergl. Beispiel 1) |
| 26,0 Gew.-Teile | eines auf Ethylendiamin gestarteten Propylenoxid-Polyethers, OH-Zahl 470 |
| 25,0 Gew.-Teile | eines auf Trimethylolpropan gestarteten Propylenoxid-Polyethers, OH-Zahl 550, (vergl. Beispiel 1) |
| 100,0 Gew.-Teile | Polyolmischung, OH-Zahl 277, Viskosität bei 20°C ca. 2 000 mPas |

Die Polyolkomponente wird durch folgende Formulierung sprühfertig gemacht:

| | |
|---|---|
| 100,0 Gew.-Teile | Polyolmischung, OH-Zahl 277 |
| 0,5 Gew.-Teile | einer Mischung aus 25 Gew.-% K-acetat und 75 Gew.-% Diethylenglykol |
| 0,005 Gew.-Teile | Dibutylzinndilaurat |

Die Klebstoff-Mischung besteht aus:

| | |
|---|---|
| 100,0 Gew.-Teilen | obiger Polyolkomponente, OH-Zahl ca. 277 |
| 80,0 Gew.-Teilen | des technischen Roh-MDI-Typs (NCO-Gehalt ca. 31,4 %) gemäß Beispiel 1 |
| 180,0 Gew.-Teile | Klebstoff-Mischung, Kennzahl 120 |

### Verarbeitung (Variante 1)

Die obigen Klebstoff-Komponenten werden mittels der gleichen, in Beispiel 1 bereits beschriebenen HK-Anlage versprüht. Im Unterschied zu dem erfindungsgemäßen Klebstoff gemäß Beispiel 1 muß eine größere Menge von ca. 130 g pro m² aufgesprüht werden, um einen ausreichend großen Benetzungszustand zu erreichen. Im Unterschied zu dem erfindungsgemäßen schäumt dieser Klebstoff-Film nicht auf. Es zeigt sich, daß der Klebstoff ca. 40 Minuten gut verarbeitet werden kann.

Danach ist er abgebunden und läßt sich nicht mehr thermisch regenerieren. Ein Arbeiten auf Vorrat, wie in den Beispielen 1 und 3 beschrieben, ist damit nicht möglich.

### Beispiel 3 (erfindungsgemäß)

Im Unterschied zu Beispiel 1 ist in dieser Polyol-Komponente der Anteil trifunktioneller Polyether mit hoher OH-Zahl vergrößert worden. Außerdem wird eine weitere Variante des Fertigungsprozesses von Formteilen beschrieben.

### Rezeptur

| | |
|---|---|
| 35,3 Gew.-Teile | eines auf Propylenglykol gestarteten Propylenoxid-Polyethers, OH-Zahl 270 (vergl. Beispiel 1) |
| 17,7 Gew.-Teile | eines auf Trimethylolpropan gestarteten Propylenoxid/Ethylenoxid (87 Gew.% / 13 Gew.%)-Polyethers, OH-Zahl 35 (vergl. Beispiel 1) |
| 17,7 Gew.-Teile | eines auf Trimethylolpropan gestarteten Propylenoxid-Polyethers, OH-Zahl 550 (vergl. Beispiel 1) |
| 11,0 Gew.-Teile | eines Phthalsäure-Diethylenglykol-Ethylenglykol-Polyesters, OH-Zahl 290 (vergl. Beispiel 1) |
| 9,3 Gew.-Teile | Ethylenglykol, OH-Zahl 1806 |
| 9,0 Gew.-Teile | eines auf Trimethylolpropan gestarteten Ethylenoxid-Polyethers, OH-Zahl 550 |
| 100,0 Gew.-Teile | Polyolmischung, OH-Zahl 448, |

Die Polyolkomponente wird durch folgende Formulierung sprühfertig gemacht:

| | |
|---|---|
| 100,0 Gew.-Teile | obige Polyolmischung, OH-Zahl 448, |
| 1,0 Gew.-Teile | einer Mischung aus 25 Gew.-% K-acetat und 75 Gew.-% Diethylenglykol |
| 0,1 Gew.-Teile | Dibutylzinndilaurat |
| 1,0 Gew.-Teile | Wasser |
| 102,1 Gew.-Teile | Polyolkomponente, OH-Zahl ca. 500 |

Die Klebstoff-Mischung besteht aus:

| | |
|---|---|
| 100,0 Gew.-Teilen | obiger Polyolkomponente, OH-Zahl ca. 500 |
| 180,0 Gew.-Teilen | des technischen Roh-MDI-Typs (NCO: 31,4 %), gemäß Beispiel 1 |
| 280,0 Gew.-Teile | Klebstoff-Mischung, Kennzahl 150 (unter Einbeziehung von Wasser) |

### Verarbeitung (Variante 2)

Dieser Klebstoff kann, wie in Beispiel 1 beschrieben, angewendet werden. Die damit verklebten Formteile lassen sich sehr gut aus dem heißen Werkzeug entnehmen. Die Formteile haben eine hohe Steifigkeit. Durch Reduzierung der Aktivierung kann man die Verarbeitbarkeit von mit diesem Klebstoff besprühten flächigen Teilen auf ca. 10 Stunden erweitern.

Eine 2. Möglichkeit sei nachfolgend erläutert. Mit diesem Klebstoff werden nach der in Beispiel 1 beschriebenen Methode ein Abdeckvlies, eine Glasmatte sowie ein Dekorvlies einseitig besprüht. Der Sandwich entsteht durch Aufeinanderlegen besagter flächiger Teile in folgender Reihenfolge: Abdeckvlies, Glasmatte, Schaumstoffplatte, Glasmatte, Dekorvlies. Dieser Sandwich wird über Nacht, also mindestens 12 Stunden gelagert. Der aufgesprühte, erfindungsgemäße Klebstoff-Film fühlt sich danach trocken an. Die gelagerten Sandwiches werden nacheinander in eine größere IR-Heizung, wie sie bei der Herstellung von Autohimmeln eingesetzt wird, geschoben. Handelt es sich bei dem Schaumstoff-Material um Polystyrol-Copolymerisat, so wird der Sandwich in ca. 2 Minuten auf 130°C, bei einem Schaumkern aus Polyurethan wird der Sandwich in ca. 3 Minuten auf 190°C erwärmt. Der warme Sandwich gelangt danach in ein kaltes Werkzeug und wird hier während ca. 30 Sekunden zu einem Autohimmel verpreßt.

Es war überraschend, daß sich der erfindungsgemäße Klebstoff nach ca. 12stündiger Lagerung und obwohl er sich trocken, d.h. abgebunden anfühlte, thermisch aktivieren ließ und zu festen, steifen Verklebungen führte. Dieses Verhalten konnte weder von dem in Beispiel 2 erläuterten Klebstoff noch mit den im Stand der Technik erwähnten Einkomponenten-Klebstoffen erzielt werden.

## Patentansprüche

1. Lösungsmittelfreie 2-Komponenten-Polyurethan-Reaktionsklebstoffe, bestehend aus
1.) einer wasserhaltigen Polyolkomponente,
2.) einer Polyisocyanat-Komponente auf Basis von Diphenylmethandiisocyanaten und gegebenenfalls
3.) Hilfs- und Zusatzstoffen,
dadurch gekennzeichnet, daß
a) die Polyolkomponente 1.) maximal drei OH-Gruppen, einen Wassergehalt von 0,25 bis 2,0 Gew.-% und eine OH-Zahl von 300-600 aufweist und
b) die Komponente 1) und die Komponente 2) in solchem Mengenverhältnis vorliegen, daß die Isocyanat-Kennzahl 120 bis 250 beträgt.

2. Lösungsmittelfreie 2-Komponenten-Polyurethan-Reaktionsklebstoffe gemäß Anspruch 1, dadurch gekennzeichnet, daß der Wassergehalt der Komponente 1.) 0,5 bis 1,1 Gew.-% beträgt.

3. Lösungsmittelfreie 2-Komponenten-Polyurethan-Reaktionsklebstoffe gemäß Anspruch 1 und 2, dadurch gekennzeichnet, daß die Kennzahl 140 bis 170 beträgt.

4. Verwendung der lösungsmittelfreien 2-Komponenten-Polyurethan-Reaktionsklebstoffe, gemäß einem der Ansprüche 1 bis 3, zur Herstellung von sandwichartigen Fahrzeug-lnnenverkleidungen, insbesondere Automobil-Innenverkleidungen.

## Claims

1. Solvent-free, two-component polyurethane reactive adhesive consisting of
1) a polyol component containing water,
2) a polyisocyanate component based on diphenylmethane diisocyanates and optionally
3) auxiliary substances and additives,
characterised in that
a) the polyol component 1) has at most three OH groups, a water content of 0.25 to 2.0 wt.% and an OH value of 300-600 and
b) component 1) and component 2) are used in a quantity ratio such that the isocyanate index is 120 to 250.

2. Solvent-free, two-component polyurethane reactive adhesive according to claim 1, characterised in that the water content of component 1) is 0.5 to 1.1 wt.%.

3. Solvent-free, two-component polyurethane reactive adhesive according to claims 1 and 2, characterised in that the index is 140 to 170.

4. Use of the solvent-free, two-component polyurethane reactive adhesives according to one of claims 1 to 3 for the production of sandwich-type vehicle interior trim, in particular automotive interior trim.

## Revendications

1. Adhésifs de mélange, sans solvant, à deux composants, en polyuréthanne, consistant en :
1) un composant polyol aqueux ;
2) un composant polyisocyanate à base de diphénylméthane-diisocyanates, et facultativement
3) des adjuvants et additifs,
caractérisés en ce que
a) le composant polyol 1) présente au maximum trois radicaux OH, une teneur en eau de 0,25 à 2,0% en poids et un indice OH de 300 à 600, et
b) le composant 1) et le composant 2) sont présents en un rapport des quantités tel que le nombre caractéristique d'isocyanate se situe dans l'intervalle allant de 120 à 250.

2. Adhésifs de mélange, sans solvant, à deux composants, en polyuréthanne, suivant la revendication 1, caractérisés en ce que la teneur en eau du composant 1) se situe dan l'intervalle allant de 0,5 à 1,1% en poids.

3. Adhésifs de mélange, sans solvant, à deux composants, en polyuréthanne, suivant les revendications 1 et 2, caractérisés en ce que le nombre caractéristique se situe dan l'intervalle allant de 140 à 170.

4. Utilisation des adhésifs de mélange, sans solvant, à deux composants, en polyuréthannes, suivant les revendications 1 à 3, dans la préparation de panneaux intérieurs pour véhicules automoteurs, de type sandwich, en particulier de panneaux intérieurs pour automobiles.
